# EUROPÄISCHE PATENTSCHRIFT

(11) **EP 0 641 904 B1**
(45) Veröffentlichungstag und Bekanntmachung des Hinweises auf die Patenterteilung: **18.03.1998**
(21) Anmeldenummer: 94250214.7
(22) Anmeldetag: 29.08.1994
(51) Int. Cl.: E04F 15/10, E01C 5/20

(54) **Flächenförmiger, aus Teilflächen bestehender, montagefähiger, flexibler Fussbodenbelag**
Plane-shaped, flexible floor covering formed of surface portions capable of being assembled
Revêtement de sol flexible de forme plane, composé par des portions de surface et capable d'être assemblé

(30) Priorität: 01.09.1993 DE 9313471 U
(43) Veröffentlichungstag der Anmeldung: 08.03.1995
(73) Patentinhaber: debolon dessauer bodenbeläge GmbH, D-06846 Dessau (DE)
(72) Erfinder: Kopf, Manfred, Dipl.-Ing., D-06846 Dessau (DE)
(74) Vertreter: Burghardt, Rosemarie, Dipl.-Jur.,Dipl.-Ing.

(56) Entgegenhaltungen:
- EP-A- 0 210 398
- DE-A- 2 653 991
- DE-A- 2 724 381
- FR-A- 2 108 916
- US-A- 2 680 698
- US-A- 3 657 852
- US-A- 5 052 158

## Beschreibung

Die Erfindung kommt bei einem flexiblen Fußbodenbelag, vorwiegend aus Kunststoff, der aus einzelnen Teilflächen zu einem großflächigen Gebilde zusammengesetzt ist, zur Anwendung und betrifft die Ausbildung der Fügungen der einzelnen Teilflächen.

Bekannt sind Fußbodenbeläge, die auf das Flächenmaß des Raumes zurechtgeschnitten werden. Diese Verlegetechnik ist aufwendig und führt einerseits bei kleinen Räumen zu großem Verschnitt und andererseits beim Belegen von Böden in großflächigen Räumen zu Stoßkanten-Fügespalten. Letztere sind nicht nur eine Gefahrenquelle bei einer längeren Benutzungsdauer aufgrund des sich Aufrichtens der Stoßkanten, sondern es bilden sich auch unangenehme Ablagerungsspalten für Verunreinigungen. Der Nachteil des großen Verschnitts bei der Auslegung kleinflächiger Räume mit Fußbodenbelag wurde dadurch vermieden, daß die Gesamtflächen aus Teilflächen zu großflächigen Gebilden für den Bodenbelag zusammengesetzt wurden. Damit war zwar das Problem des auftretenden Verschnitts gelöst, aber das Problem der Ausbildung von Fügespalten mit den bereits genannten Nachteilen war nicht gelöst. Vielmehr trat dieses Problem dann auch noch verstärkt auf. Eine Ursache für das sich Ausbilden von Fugenspalten nach der Verlegung der Teilflächen zu einem flächendeckenden Fußbodenbelag sind auftretende, bzw. eingeleitete Spannungen infolge der auftretenden Belastung durch eine Begehung desselben. Diesen Mangel, der u.a. auch darin begründet ist, daß die Teilflächen nicht zusammenhängend, sonderen nur auf Stoß verlegt sind, hat die Fachwelt dadurch versucht zu beseitigen, indem die Teilflächen nicht mehr auf Stoß verlegt wurden, sondern die die Teilflächen begrenzenden Kanten so profiliert ausgebildet worden sind, daß eine auf eine Teilfläche wirkende Spannung als Zugspannung in eine angrenzende Teilfläche übertragen werden konnte. Dabei waren jeweils zwei aufeinander stoßende Kantenprofile mit gleichartiger Profilierung gestaltet, d.h. die Profilierung besteht aus einer Spezialverzahnung mit einer besonderen Zahnausbildung, wobei die Zahnausbildung sowohl das Ineingriffbringen als auch ein Entriegeln eindimensional, d.h. in der Verlegeebene ausschließt. Mit dieser Ausbildung der Begrenzungen der Teilflächen wurde erreicht, daß diese sich miteinander reißverschlußartig "verhaken" und sich im unbelasteten Zustand nicht auseinanderziehen lassen. Diese Verzahnung besteht aus Zähnen, die Hinterschneidungen aufweisen, wodurch ein bezweckter Formschluß herbeigeführt wird. Nach dem allgemeinen Stand der Technik sind drei Grundformen der Zahnausbildung, die schwalben-, die biberschwanz- und die pilzförmige Zahnausbildung bekannt geworden.

Nach der DE-A-2 953 991 ist ein elastischer Bodenbelag bekannt, der aus biegeelastischem Bahnenmaterial besteht, dessen einzelne Bahnen an ihren Längs- und Querkanten mit dem o. g. Zweck der Herstellung eines Formschlusses zwischen den Bahnen dienenden Verzahnungen versehen sind. Diese Verzahnungen bestehen aus abgerundete Begrenzungskanten aufweisenden Zähnen und entsprechend geformten Zahnlücken, in die jeweils wechselseitig von Bahn zu Bahn die vorgesehenen Zähne eingreifen. Die Form der Zähne ist durch ihre negativ hinterschnittenen Zahnköpfe und positiv hinterschnittenen Zahnfüße bzw. die hierauf abgestimmt geformten Zahnlücken bestimmt. Die Begrenzungskanten der Zahnköpfe und Zahnfüße sind abgerundet ausgeführt bzw. durch ineinander übergehende Kreisbögen gebildet. Diese Formgestaltung der Zähne bzw. Zahnlücken erleichtert das Ineingriffbringen der Zähne in die zugehörigen Zahnlücken beim Verlegen des Bodenbelages bzw. dem Verbinden einer bereits verlegten Materialbahn mit der anschließend zu verlegenden, benachbarten Materialbahn. Hierbei wird die jeweilige Materialbahn in Verlegerichtung mit fortschreitender Kippbewegung mit ihren sich an der Begrenzungskante befindenden Zähnen in die Zahnlücken der bereits verlegten Materialbahn abgesenkt. Die zu verlegende Materialbahn wird während dieses Verlegevorganges gegen die Verlegefläche hin etwas durchgebogen, wodurch auch ihre Zahnelemente entsprechend leicht durchgewölbt werden. Die Dehnung an der unteren Flächenseite der Materialbahn, die sich auf die Zahnfüße stärker auswirkt als auf die Zahnköpfe, führt dazu, daß die Breite der Zahnfüße bei gleichzeitiger Verringerung der Breite der Zahnköpfe geringfügig vergrößert wird, so daß das Ineingriffbringen der gegenüberstehenden Zahnelemente benachbarter Flanken von Materialbahnen erleichtert wird. Sobald die Verzahnung der zu verlegenden Materialbahn flächig auf dem Untergrund aufliegt, nehmen die Verzahnungs-elemente wieder ihre normalen Abmessungen ein, so daß die Kantenstöße der ineinandergreifenden, einander angepaßten Verzahnungen sich vollständig schließen und eine mechanische Verkettung der Materialbahnen bilden sollen. Letzteres wird jedoch nur solange erreicht, wie keine Zugkräfte auf diese Materialbahnen einwirken, die jeweils gegenläufig von Materialbahn zu Materialbahn gerichtet sind. Sobald letztgenannte Kräfte auftreten, verformen sich die Zahnköpfe der Zähne dieser Materialbahnen vorwiegend in dem durch die Hinterschneidungen bedingten Bereich der Querschnittsverringerung und es kommt zum Auftreten von Spalten zwischen den Zahnköpfen der einen Teilfläche und den jeweils zwischen zwei Zähnen der anderen benachbarten Teilfläche gebildeten Zahnlücken.

Letztgenannter Nachteil tritt ebenso auch bei der Form der Zahnausbildung auf, die nach der EP-A-0 210 398 zur Verbindung von Dämmplatten aus Schaumkunststoff vorgesehen ist und eine biberschwanzförmige Verzahnung aufweist. Diese biberschwanzförmige Verzahnung besitzt Zähne bzw. Zahnlücken, die geometrisch aus einem Trapez mit einem an dessen längerer paralleler Seite angesetzten Segment einer axsialsymmetrischen Kurve 2. Ordnung und einem Ansatz zusammengesetzt sind, der von der Begrenzungslinie der Grundplatte bis zur kürzeren parallelen Seite des Trapezes reicht und die Form hat, die sich aus der dazugehörigen vollflächigen Ergänzung der angrenzenden Platte, d. h. den entsprechenden, sich an der Kante der Platte befindenden Zähnen bzw. Zahnlücken ergibt. Auch diese biberschwanzförmige Ausbildung der Verzahnung dient vorrangig der Erleichterung des Zusammenfügens der Platten durch das miteinander Ineingriffbringen der Zahnlücken und Zähne, die sich an den Kanten derselben befinden. Ein gegenseitiges Verhaken der Verzahnungen zweier Platten, die miteinander in Eingriff stehen, ist mit dieser Art der Zahnausbildung nicht zu erreichen. Auch die keilförmig zueinander verlaufenden Seiten der trapezformartigen Bereiche der Zähne sind nicht geeignet, eine Verzahnungswirkung zu übernehmen. Vielmehr kommt es bei auf benachbarte Teilflächen einwirkenden, gegenläufig verlaufenden Zugkräften dazu, daß sich die Zähne der biberschwanzförmigen Verzahnungen an ihrer schwächsten Stelle dehnen, wobei sich gleichzeitig die Tiefe derjeweiligen Zahnlücke vergrößert und sich ein Spalt zwischen dem Grund der Zahnlücke und dem in diese eingreifenden Kopf des betreffenden Zahnes ausbildet. Zu der behaupteten Verteilung der Spannungen tangential über die Oberflächenwölbung der oberen Begrenzung der Zähne kann es nicht kommen, da die auf die Verzahnung wirkenden Zugkräfte an den Begrenzungskanten der Zahnköpfe keine Angriffsfläche finden, in die die Kräfte eingeleitet werden könnten. Diese hier vorgesehenen Verzahnungsseiten, die durch die ausgebildete Trapezform entstehen, sind nicht geeignet, die Funktion einer Verzahnung zu übernehmen, die eine formschlüssige und formstabile Verbindung der Teilflächen miteinander gewährleistet.

Ein Vertreter der schwalbenschwanzförmigen Zahngestaltung findet sich in der Lehre nach dem US-A-5 052 158. Die Zahnform besteht aus trapezförmigen Flanken und seitenparallelen Grund- und Kopfbegrenzungen. Die geradlinige Kopfbegrenzung geht in die trapezförmigen Flanken mit einer Abrundung über. Gleichfalls ist der Übergang von der trapezförmigen Zahnflanke in die Grund/Zahnlückenbegrenzung stetig verlaufend. Das Zusammensetzen der einzelnen montagefähigen, mit den schwalbenschwanzförmigen Zähnen versehenden Teilflächen erfolgt in ähnlicher Weise wie bei solchen Teilflächen, die eine biberschwanzförmige Verzahnung aufweisen. Ein Formschluß zwischen den Zähnen der einzelnen Teilflächen ist nur durch die trapezförmige Ausbildung gewährleistet.

Dieser Art der Verzahnung haftet der Nachteil an, daß eine Belastung der schwalbenschwanzartigen Verbindung mit einer Zugspannung zu einer verstärkten Spaltbildung zwischen den Zahnköpfen der Verzahnung der einen Teilfläche und der Zahnfußkontur der anderen Teilfläche kommt. Dies ist darauf zurückzuführen, daß bei auftretenden Zugspannungen die auf die trapezförmigen Zahnflanken einwirkt, es zu einer Aufbiegung der Randzonen der Zahnkopfes der pilzförmigen Verzahnung und damit zu einer Einknickung der Kopfbegrenzung der Zähne kommt.

Die gleiche nachteilige Spaltenbildung infolge horizontaler Zugbelastungen findet sich bei einer Zahnausbildung nach der FR-A-2 108 916. Die Zahnausbildung nach dieser Lehre stellt eine Weiterentwicklung der schwalbenschwanzförmigen Verzahnung in Richtung pilzförmiger Verzahnung dar. Hierbei sind die obere Begrenzung des Pilzkopfes und die Grundbegrenzung der Zahnlücke geradlinig ausgebildet. Bei auftretenden Zugspannungen wird der Rand des Pilzkopfes nach oben gebogen und die Kopfmitte wird in gleicher Weise wie bei der schwalbenschwanzförmigen Verzahnung nach innen geknickt, wodurch sich eine vergrößerte Spaltenausbildung ergibt.

Die montagefähigen Teilflächen mit der Verzahnung nach der letztgenannten Lehre weisen einen weiteren und zusätzlichen Mangel auf, der darin besteht, daß die Teilflächen nicht in beliebiger Lage zueinander montagefähig sind. Dieser Mangel ist in der speziellen Ausbildung der Begrenzungskanten der Teilflächen begründet, aus der sich an diesen mindestens zwei unterschiedlich geformte Eckausbildungen ergeben.

Die Profilausbildung hat die Form von pilzförmigen Zähnen, wobei sich jeweils zwischen den einzelnen pilzförmigen Zähnen eine profilierte Zahnlücke befindet, in die ein pilzförmiger Zahn mit gleicher Kontur der benachbarten Teilfläche eingepaßt ist, d.h. eingreift. Jeder pilzförmige Zahn besteht aus einem Kopf mit einer stoßkantenparallelen Begrenzung in Richtung einer benachbarten Teilfläche und jeweils einer linken und rechten Begrenzung mit einer konkaven Formgebung, wobei diese seitlichen Begrenzungslinien jeweils mit einem Radius einerseits in die plan ausgebildete Kopfbegrenzung und andererseits in die ebenfalls plan ausgebildete Fußbegrenzung der Zahnlücken der Teilfläche übergeht.

Im belasteten Zustand zeigt diese Profilierung allerdings einen Mangel, der darin besteht, daß sich Stoßfugenspalte trotz der Profilierung ausbilden. Die Ursache hierfür liegt in der Formgebung der pilzförmigen Zähne. Durch die in die Profilierung der Fügegeometrie eingeleiteten Spannungen verbiegt sich jeweils die linke und rechte Kante des pilzförmigen Zahnes in Wirkungsrichtung der auftretenden Zugspannungen mit der Folge, daß jeweils zwischen Kopfbegrenzungskantenlinie der einen Teilfläche und der Fußbegrenzungskantenlinie einer benachbarten Teilfläche ein geringer Spalt entsteht. Auf Grund dieser entstehenden vorgenannten Verbiegungen entstehen auch beim Aufeinandertreffen von 4 Stück Teilflächen in einem Eckpunkt Spalte. Die Eckausbildung von zwei vorwiegend rechtwinklig aufeinanderstoßenden Begrenzungen einer Teilfläche ist mit einem abgestuften Rechteckprofil versehen. Die Eckpunktausbildung von 4 aufeinanderstoßenden Teilflächen mit dem vorgenannten Profil ist nicht an dem Formschluß benachbarter, angrenzender Teilflächen beteiligt und vergrößert lediglich die Fugenlänge im Eckpunkt.

Diese Spaltenbildungen mindern nicht nur das Aussehen eines flächendeckend mit Teilflächen ausgelegten Raumes, sondern schränken auch die Verwendung soweit ein, daß aus diesen Teilflächen bestehende Bodenbeläge nicht in solchen Räumen verwendet werden können, wo es darauf ankommt, Staubablagerungen in Fugen und Spalten sowohl aus hygienischen als auch aus technischen Gründen zu vermeiden.

Unterhalb des Fußbodenbelages abgesonderter Staub stellt aus mikrobiologoischer Sicht eine zusätzlich Beeinträchtigung in der Verwendung dar. Zu all den vorgenannten Mängeln kommt noch, daß Fußbodenbeläge die aus vorgenannten Gründen Fugenspalten aufweist, nicht versiegelt werden können, weil die Versiegelung wegen dieser Fugen wirkungslos bleiben würde.

Die Erfindung zielt darauf ab, das Entstehen solcher Spalte zu vermeiden und damit die Qualität in der Auslegung eines Raumes mit aus Teilflächen bestehenden Bodenbelägen, zu erhöhen.

Der Erfindung liegt die Aufgabe zugrunde, für einen aus mit einer pilzförmigen Kantenprofilierung versehenen Teilflächen bestehenden flächendeckenden Bodenbelag für die durch jeweils 4 aufeinanderstoßende Teilflächen gebildeten Eckpunkte der zu fügenden Teilflächen eine verformungsstabile Profilierung mit möglichst kurzen Stoßfugen zu entwickeln.

Diese Aufgabe wurde dadurch gelöst, daß für die Stoßfugengeometrie der aneinanderstoßenden Teilflächen eines aus Teilflächen bestehenden, flächendeckenden Fußbodenbelages, bei dem die Stoßfugengeometrie mit einer flächenartigen, pilzförmigen Verzahnung versehen ist und jeder der pilzförmig ausgebildeten Zähne aus einem Kopf und einem beiderseitig mit konkav gestalteten Begrenzungen versehenen Schaft mit einem durch eine stetige Kurvenkontur gebildeten kontinuierlichen Übergang jeweils vom Schaft zu den sich links und rechts vom Schaft erstreckenden Fußbegrenzungskantenlinien der benachbarten Zahnlücken und vom Schaft zum Kopf, d.h. zur Kopfbegrenzungskantenlinie besteht, und das Kopfteil jedes Zahnes durch eine konvex gewölbte Außenkontur und das Fußteil beiderseitig durch eine konkav gewölbte Innenkontur begrenzt sind, wobei die konkav gewölbte Innenkontur in der Ausbildung ihrer Wölbung der konvex gewölbten Außenkontur entspricht und die untere Begrenzung der Zahnlücken bildet, wobei zwischen Kopfteil und Fußteil ein Schaftteil vorgesehen ist, das eine Übergangskontur aufweist, die die Innenkontur mit der Außenkontur verbindet, und die Übergangskontur eine spiegelbildlich übereinstimmende Form zu einer Mittelachse aufweist, entwickelt wurde, bei der erfindungsgemäß jeweils zwei der jede Teilfläche vierseitig umschließenden, profilierten Begrenzungskonturen in eine Stoßecke übergehen, wobei jeweils zwei dieser rechtwinklig zueinander liegenden profilierten Begrenzungskonturen der Teilfläche eine Stoßecke bilden und die aus Zähnen und Zahnlücken gebildete Begrenzungskontur einen mit einer Stoßecke versehenen Schlußzahn bzw. eine Schlußzahnlücke mit einer unsymmetrischen Form aufweist.

Jede Stoßecke des Schlußzahnes wird jeweils durch zwei rechtwinklig zueinander stehende Konturlinien begrenzt, wovon eine der Konturlinien in der Verlängerung einer Diagonalen der Teilfläche liegt.

Vorteilhafterweise hat die Außenkontur des Kopfteiles die Kurvenform einer Ellipse und die Kurvenform der gewölbten Innenkontur des Fußteils schließt eine Ellipse ein.

Die Teilflächen, die mit erfindungsgemäß ausgebildeten Begrenzungskonturen versehen sind, zeigen im ausgelegten Zustand, d.h. in dem Teilflächen zu einem flächendeckenden Fußbodenbelag in einem Raum ausgelegt sind, nach intensiver Beanspruchung in keiner Weise Spaltenausbildungen. Nach Auslegung der Teilflächen können sich auch durch die Belastungen die erfindungsgemäß gestalteten pilzförmigen Zähne nicht "aufbiegen". Aufgrund der gewölbten Außenkontur des Kopfteiles der Zähne innerhalb der Begrenzungskontur der Teilfläche können sich diese Kopfteile der Zähne nicht an ihren seitlichen Teilen der Außenkonturen verbiegen, da durch die Wölbung des Kopfteiles der Zähne dieselben in der Lage sind, alle in eine Teilfläche eingeleiteten Zugspannungen in den gesamten Füßbodenbelag zu übertragen. Durch die vermiedene Spaltenausbildung zwischen den Teilflächen erhöhen sich die Einsatzmöglichkeiten von aus solchen Teilflächen zusammengefügtem Fußbodenbelag. Staubablagerungen zwischen den Teilflächen sind nahezu ausgeschlossen und der aus Teilflächen zusammengesetzte Fußbodenbelag läßt sich versiegeln.

Die neue technische Lösung soll nachstehend an einem Ausführungsbeispiel näher erläutert werden. In der zugehörigen Zeichnung zeigen:

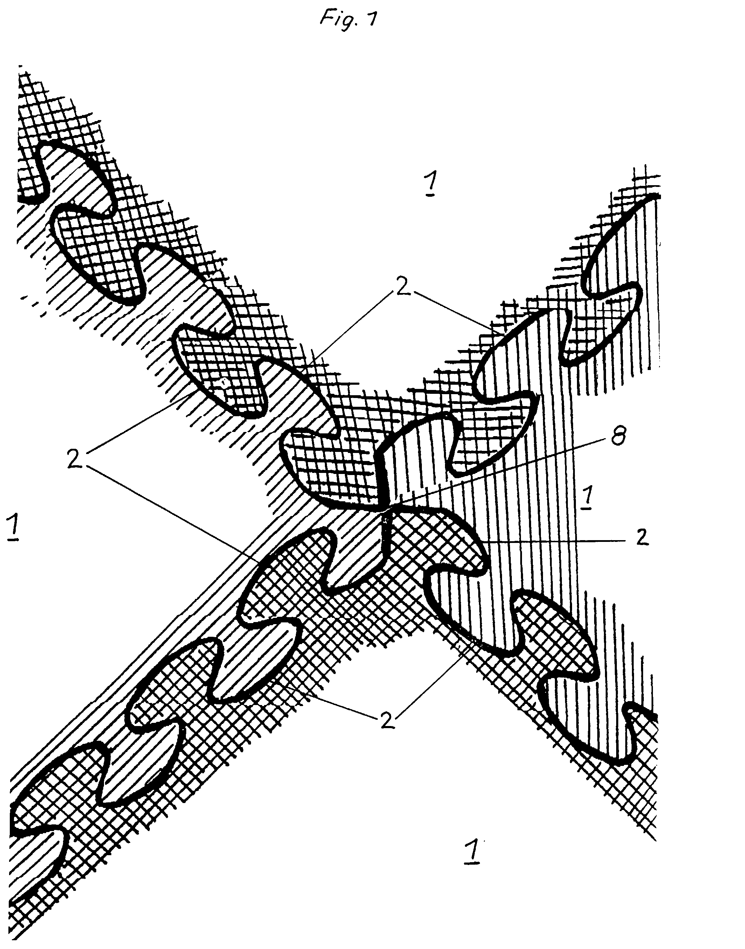

- Fig. 1: eine aus vier Teilflächen gebildete Eckverbindung, wovon jeweils zwei Teilflächen eines montagefähigen Fußbodenbelages mit ihren profilierten Begrenzungskonturen aneinander stoßen.

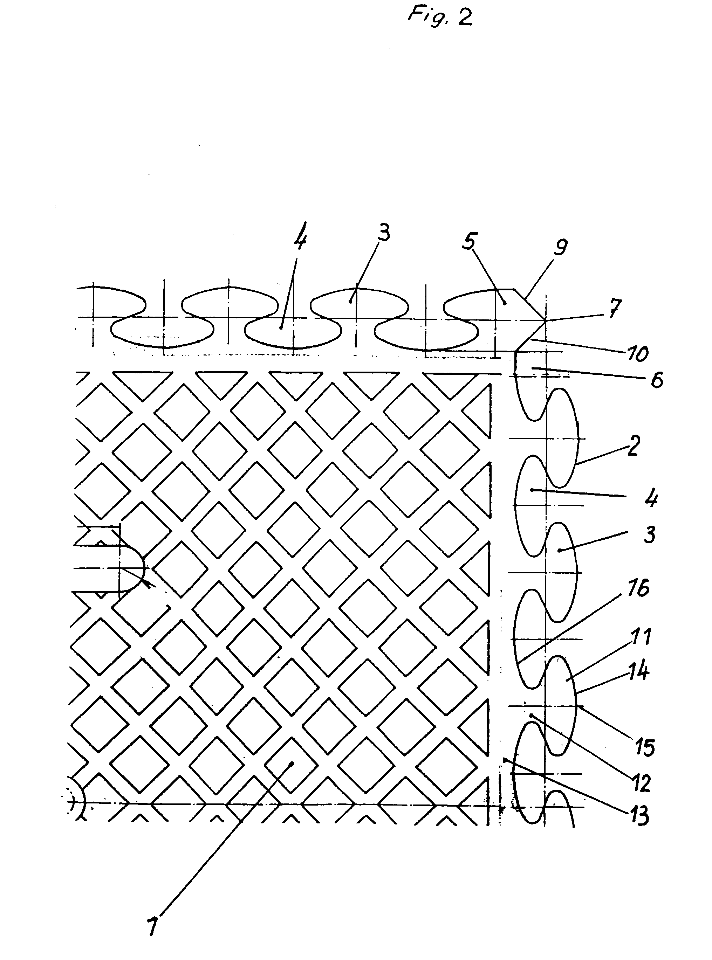

- Fig. 2: eine Teilfläche in Teildarstellung mit zwei im rechten Winkel zueinander vnrlaufenden profilierten Begrenzungskonturen,

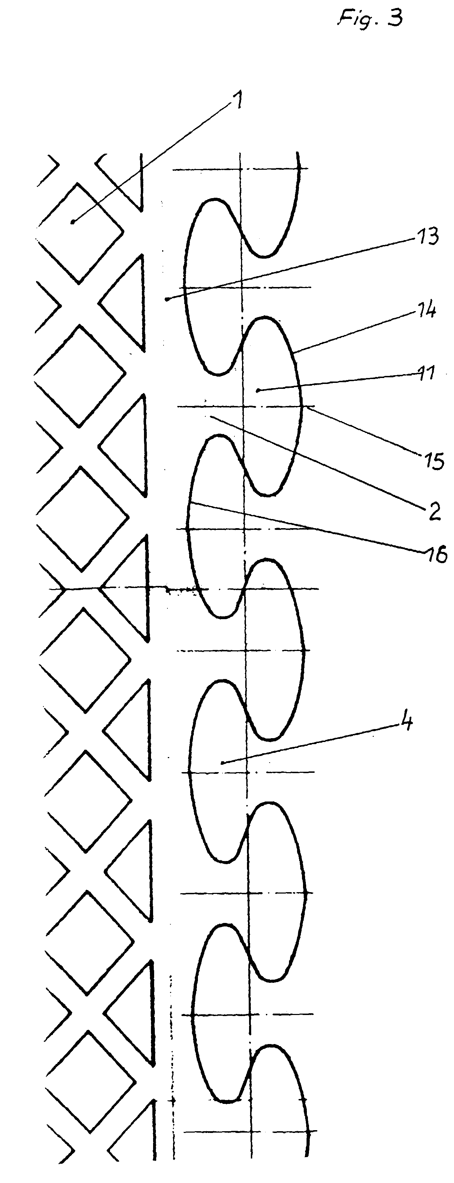

- Fig. 3: ein Profil einer der Begrenzungskonturen einer Teilfläche,

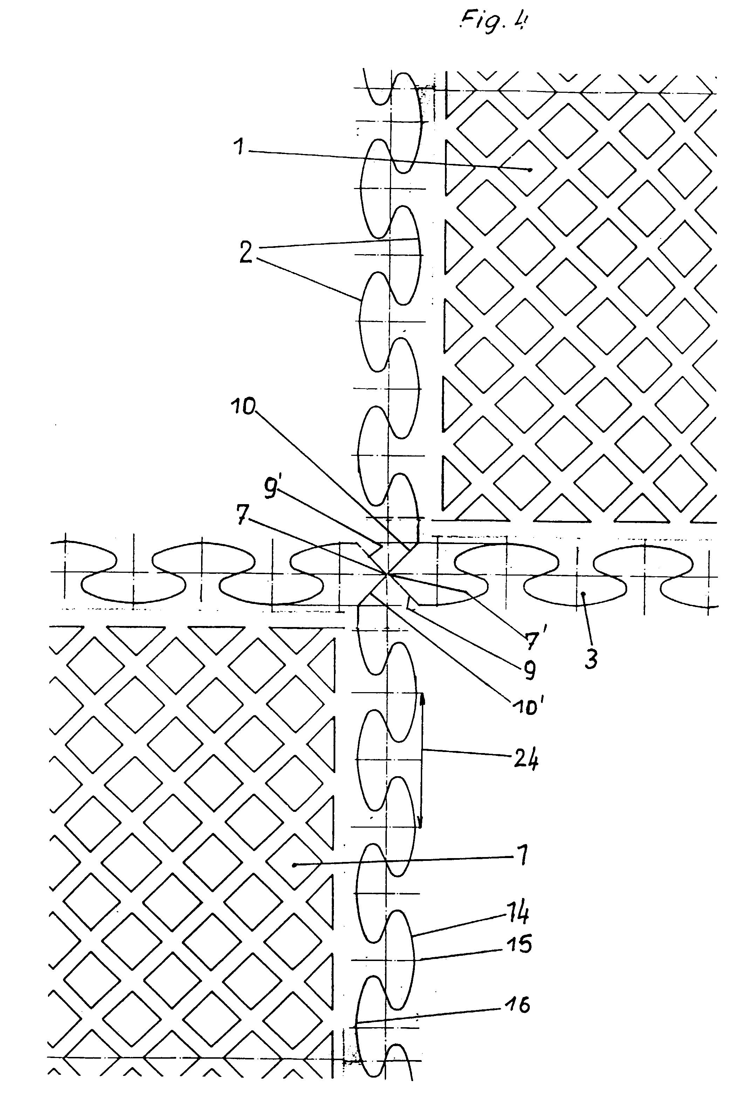

- Fig. 4: eine Darstellung einer pilzförmigen Verzahnung aus der Stoßfugengeometrie

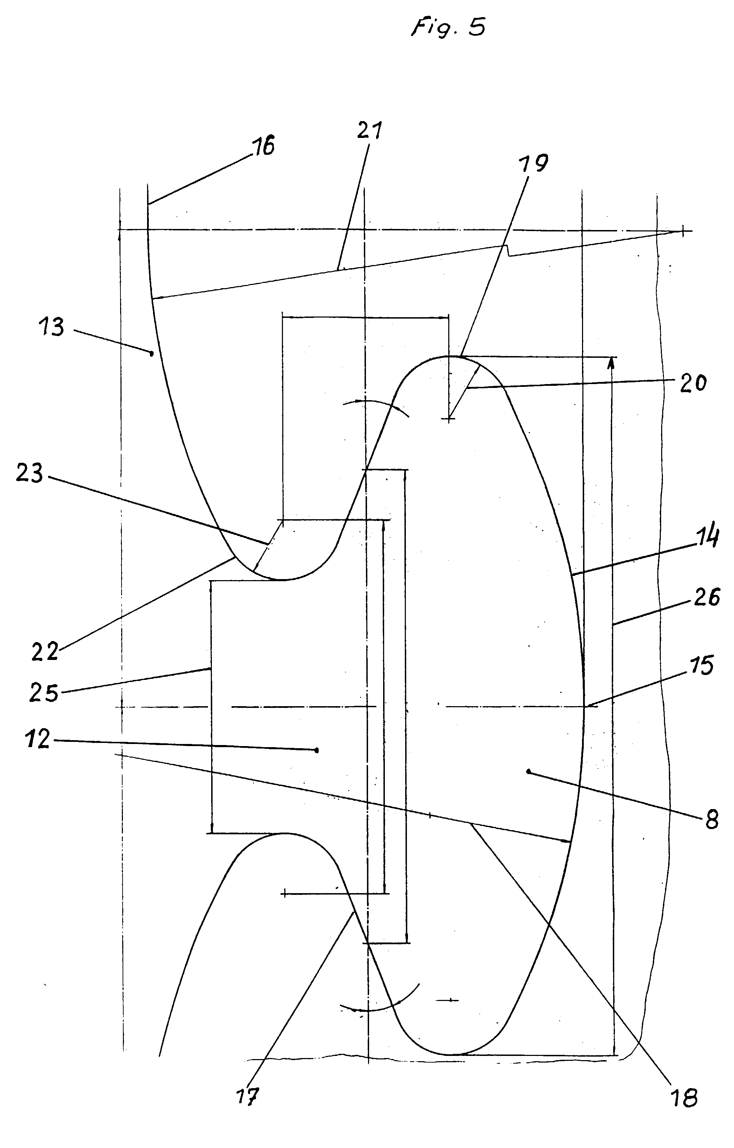

- Fig. 5: Darstellung eines Zahnes im vergrößerten Maßstab,

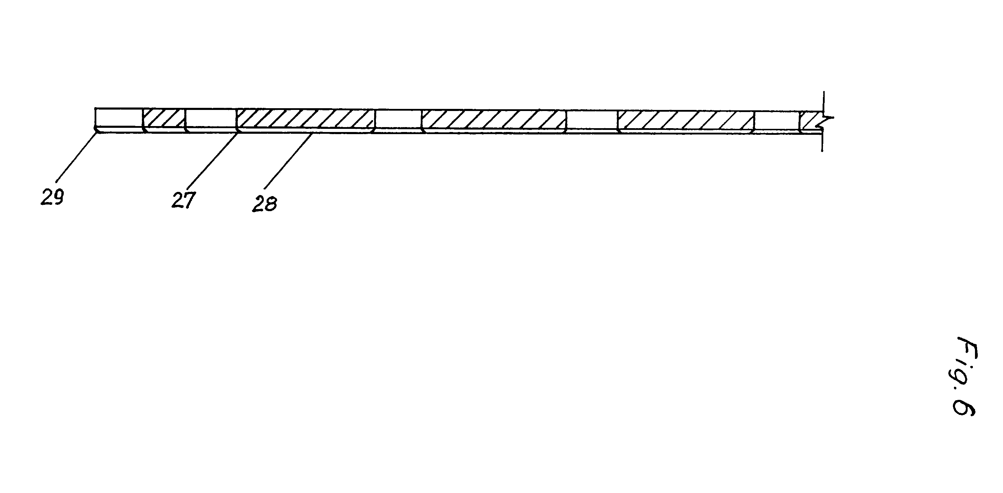

- Fig. 6: einen Schnitt durch die pilzförmige Verzahnung und durch eine Stoßecke der Teilfläche mit dargestellter Einfügungsphase.

Ein flächendeckender montagefähiger flexibler Fußbodenbelag einer nicht dargestellten Raumfläche besteht aus Teilflächen 1. Diese Teilflächen 1 sind mit profilierten Begrenzungskonturen 2 versehen. Jede profilierte Begrenzungskontur weist eine aus pilzförmig ausgebildeten Zähnen 3 und zwischen diesen Zähen 3 vorgesehenen Zahnlücken 4 bestehende Verzahnung 3; 4 auf, wobei die Zahnlücken 4 in ihrem Profil dem der Zähne 3 entsprechen. Außerdem besitzt jede Begrenzungskontur einen Schlußzahn 5 und eine Schlußzahnlücke 6, die in eine gemeinsame Stoßecke 7 auslaufen und unsymmetrische Formen aufweisen. Die Verzahnungen 3; 4 von jeweils zwei aneinanderstoßenden Teilflächen 1 stehen über die gesamte Länge der Begrenzungskontur 2 flächenmäßig miteinander im Eingriff. In einer Eckausbildung 8 stoßen jeweils vier Teilflächen 1 zusammen, wobei die sich stoßenden Begrenzungskonturen 2 der Teilflächen 1 von der aus pilzförmigen Zähnen 3 und Zahnlücken 4 sowie aus einem Schlußzahn 5 und einer Schlußzahnlücke 6 bestehenden Verzahnung in eine profilierte Stoßecke 7 bzw. 7' übergehen, die von im rechten Winkel zueinander stehenden Konturlinien 9; 9' und 10; 10' begrenzt ist. Die Konturlinien 9; 9' und 10; 10' der Stoßecke 7; 7' von jeweils zwei diagonal gegenüberliegenden Teilflächen 1 bilden jeweils eine Gerade, wobei diese Geraden von vier in der Eckausbildung 8 zusammenstoßenden Teilflächen 1 sich im rechten Winkel schneiden.

Die pilzförmig ausgebildeten Zähne 3 der Begrenzungskontur 2 bestehen aus einem Kopfteil 11, einem Schaftteil 12 und einem Fußteil 13. Das Kopfteil 11 ist mit einer konvex gewölbten Außenkontur 14 versehen, die einer elliptischen Kurve folgt, wobei der höchste Punkt der elliptisch geformten Außenkontur 14 in einer Mittelachse 15 des pilzförmig ausgebildeten Zahnes 3 liegt. Das Fußteil 13 ist durch eine konkav gewölbte Innenkontur 16 mit elliptischer Kurvenform begrenzt, wobei diese konkave Innenkontur 16 in ihrer Kurvenform der konvex gestalteten Außenkontur 14 des Kopfteiles 11 entspricht. Das Schaftteil 12 bildet den Übergang zwischen Kopfteil 11 und Fußteil 13. Die Außenkontur 14 des Kopfteiles 11 wird über eine Übergangskontur 17 des Schaftteils 12 kontinuierlich in die Innenkontur 16 überführt, wobei beiderseitig der Mittelachse 15 die Übergangskonturen 17 in spiegelbildlich übereinstimmender Form ausgebildet sind. An die elliptisch geformte Außenkontur 14 mit einem Radius 18 schließt sich ein konvexer Außenkreisbogen 19 mit einem Übergangsradius 20 an. An die elliptisch geformte Innenkontur 16 mit einem Radius 21 schließt sich ein konkaver Innenkreisbogen 22 mit einem Übergangsradius 23 an. Zwischen dem Innenkreisbogen 22 und dem Außenkreisbogen 19 erstreckt sich die Übergangskontur 17 des Schaftteiles 12, die sich als Tangente gleichzeitig am Außenkreisbogen 19 und am Innenkreisbogen 22 anliegend darstellt. Die Radien 18 und 21 der Außenkontur 14 und der Innenkontur 16 sowie der Übergangsradius 20 und der Innenradius 23 sind jeweils größengleich. Ferner sind die einzelnen Zähne 3 innerhalb der Begrenzungskontur 2 in einer Teilung 24 vorgesehen, die so gewählt ist, daß die Summe einer minimalen Flächenerstreckung 25 im Schaftteil 12 und der maximalen Flächenerstreckung 26 im Kopfteil 11 immer die doppelte Teilung 24 ergibt.

Zum problemlosen Montieren der einzelnen Teilflächen 1 des flächendeckenden Fußbodenbelages sind Einfügungsphasen 27 an der Unterseite 28 der Teilflächen 1 vorgesehen, die durch einen Kreisbogen mit einem Fügephasenradius 29 gebildet sind.

### Bezugszeichenaufstellung

- 1: Teilfläche
- 2: Begrenzungskontur
- 3: Zahn
- 4: Zahnlücke
- 5: Schlußzahn
- 6: Schlußzahnlücke
- 7: Stoßecke
- 7': Stoßecke
- 8: Eckausbildung
- 9: Konturlinie
- 9': Konturlinie
- 10: Konturlinie
- 10': Konturlinie
- 11: Kopfteil
- 12: Schaftteil
- 13: Fußteil
- 14: Außenkontur
- 15: Mittelachse
- 16: Innenkontur
- 17: Übergangskontur
- 18: Radius
- 19: Außenkreisbogen
- 20: Übergangsradius
- 21: Radius
- 22: Innenkreisbogen
- 23: Innenradius
- 24: Teilung
- 25: Flächenerstreckung
- 26: Flächenerstreckung
- 27: Einfügungsphas
- 28: Unterseite
- 29: Fügephasenradius

## Patentansprüche

1. Flächenförmiger, aus mit profilierten Begrenzungskonturen versehenen Teilflächen (1) bestehender, montagefähiger flexibler Fußbodenbelag, bei dem jede Begrenzungskontur (2) einer Teilfläche (1) aus einer pilzförmig ausgebildeten, im verlegten Zustand der Teilflächen (1) im Eingriff stehenden Verzahnung (3;4) besteht und jeder pilzförmig gestaltete Zahn (3) der Verzahnung aus einem Kopfteil (11), einem Schaftteil (12) und einem Fußteil (13) besteht und jeweils zwischen den einzelnen Zähnen (3) der Begrenzungskonturen der einen Teilfläche (1) sich je eine Zahnlücke (4) befindet, in die je ein Zahn (3) aus einer Begrenzungskontur (2) einer angrenzenden Teilfläche (1) im verlegten Zustand eingreift, und das Kopfteil (11) jedes Zahnes (3) durch eine konvex gewölbte Außenkontur (14) und das Fußteil (13) beiderseitig durch eine konkav gewölbte Innenkontur (16) begrenzt sind, wobei die konkav gewölbte Innenkontur (16) in der Ausbildung ihrer Wölbung der konvex gewölbten Außenkontur (14) entspricht und die untere Begrenzung der Zahnlücken (4) bildet, wobei zwischen Kopfteil (11) und Fußteil (13) ein Schaftteil (12) vorgesehen ist, das eine Übergangskontur (17) aufweist, die die Innenkontur (16) mit der Außenkontur (14) verbindet und die Übergangskontur (17) eine spiegelbildlich übereinstimmende Form zu einer Mittelachse (15) aufweist, ***dadurch gekennzeichnet,*** daß jeweils zwei der jede Teilfläche (1) vierseitig umschließenden, profilierten Begrenzungskonturen (2) in eine Stoßecke (7 bzw. 7') übergehen, wobei jeweils zwei senkrecht zueinander liegende profilierte Begrenzungskonturen (2) der Teilfläche (1) eine Stoßecke (7 bzw. 7') bilden und die aus Zähnen (3) und Zahnlücken (4) gebildete Begrenzungskontur (2) einen mit einer Stoßecke (7 bzw. 7') versehenen Schlußzahn (5) bzw. eine Schlußzahnlücke (6) mit einer unsymmetrischen Form aufweist.

2. Fußbodenbelag nach Anspruch 1, ***dadurch gekennzeichnet,*** daß die Stoßecke (7 bzw. 7') des Schlußzahnes (5) von jeweils zwei rechtwinklig zueinander stehenden Konturlinien (9; 10 bzw. 9'; 10') begrenzt ist, wovon eine der Konturlinien (10; 10') in der Verlängerung einer Diagonalen der Teilfläche (1) liegt.

3. Fußbodenbelag nach Anspruch 1 und 2, ***dadurch gekennzeichnet,*** daß die gewölbte Außenkontur (14) des Kopfteiles (11) des Schlußzahnes (5) die Kurvenform einer Ellipse aufweist und die gewölbten Innenkontur (16) des Fußteiles (13) der Schlußzahlücke (6) die Kurvenform einer Ellipse einschließt.

## Claims

1. Plane-shaped, flexible floor covering consisting of assemblable sections (1) with profile contoured edges where each contoured edge (2) of a section (1) consists of mushroom-shaped teeth (3,4) that interlock when the sections (1) are installed, and each mushroom-shaped tooth (3) of the teeth consists of a head (11), shaft (12) and foot (13); there is a tooth gap (4) between the individual teeth (3) of the contoured edges of the sections (1), and a tooth (3) of a contoured edges (2) of a neighboring section (1) locks in the gap when installed, and the head (11) of each tooth (3) is delimited by a convex outward contour (14), and the foot (13) is on both sides delimited by an concave inward contour (16), where the concave inward contour (16) by the shape of its curving corresponds to the convex outward contour (14) and forms the bottom edge of the tooth gaps (4), where between the head (11) and foot (13) there is a shaft (12), which has a transitional contour (17) that connects the inward contour (16) with the outward contour (14), and the transitional contour (17) has a shape as if formed by mirror images along a midaxis (15), **characterized** in that four sides of each section (1) have profile contoured edges (2) of which two at a time transition into a contact corners (7, 7'), whereby two perpendicular profile contoured edges (2) of the sections (1) form contact corners (7,7'), and the contoured edges (2) formed by teeth (3) and teeth gaps (4) have a final tooth (5) coming with a contact corner (7,7') and a final tooth gap (6) with an unsymmetrical shape.

2. Plane-shaped, flexible floor covering according to claim 1, **characterized** in that the contact corner (7, 7') of the final tooth (5) is delimited by two perpendicular contour lines (9,10 and 9',10'), and one of the contour lines (10,10') lies in the extension of one of the diagonals of the sections (1).

3. Plane-shaped, flexible floor covering according to claim 1 and 2, **characterized** in that the convex outward contour (14) of the head (11) of the final tooth (5) has the curved shape of an ellipse, and the concave inward contour (16) of the foot (13) of the final tooth gap (6) encloses the curved shape of an ellipse.

## Revendications

1. Revêtement de sol souple, planiforme, pouvant être assemblé et constitué de pièces (1) dont les contours sont profilés, sur lequel chaque contour (2) d'une pièce (1) se compose d'une série de dents (3;4) en forme de champignon, engrenées lorsque les pièces (1) sont posées sur le sol, chaque dent (3) en forme de champignon constituant la denture se compose d'une tête (11), d'un tronc (12) et d'un pied (13), chaque dent (3) du contour d'une pièce (1) est séparée de la dent suivante par un entredent (4) dans lequel mord une dent (3) faisant partie du contour (2) d'une pièce (1) voisine lorsque cette dernière est posée sur le sol et sur lequel un contour extérieur (14) bombé de manière convexe délimite la tête (11) de chaque dent (3) et un contour intérieur (16) bombé de manière concave délimite le pied (13) des deux côtés, le contour interne bombé concavement (16) présentant une bombure dont la forme correspond au contour bombé convexement (14) et formant la délimitation inférieure des entredents (4), un tronc (12), qui présente un contour de raccordement (17) établissant la jonction entre le contour intérieur (16) et le contour extérieur (14), étant prévu entre la tête (11) et le pied (13), et le contour de raccordement (17) présentant une forme concordante de manière inversée par rapport à un axe médian (15), caractérisé en ce qu'à chaque fois, deux des contours (2) profilés délimitant les quatre côtés de chaque pièce (1) se transforment en angle de joint (7 et 7'), deux contours (2) de la pièce (1) disposés verticalement l'un par rapport à l'autre formant un angle de joint (7 et 7') et le contour (2) constitué de dents (3) et d'entredents (4) présentant une dent finale (5) pourvue d'un angle de joint (7 et 7') et un entredent final (6) de forme asymétrique.

2. Revêtement de sol selon la revendication 1 caractérisé en ce que l'angle de joint (7 et 7') de la dent finale (5) est respectivement délimité par deux lignes de contour (9; 10 et 9'; 10') formant un angle droit, l'une de ces lignes de contour (10; 10') étant située dans le prolongement d'une diagonale de la pièce (1).

3. Revêtement de sol selon les revendications 1 et 2 caractérisé en ce que le contour extérieur bombé (14) de la tête (11) de la dent finale (5) présente l'allure de courbe d'une ellipse et le contour intérieur bombé (16) du pied (13) de l'entredent final (6) inclut l'allure de courbe d'une ellipse.
